# EUROPÄISCHE PATENTSCHRIFT

(11) **EP 1 300 574 B1**
(45) Veröffentlichungstag und Bekanntmachung des Hinweises auf die Patenterteilung: **23.01.2008**
(21) Anmeldenummer: 02020128.1
(22) Anmeldetag: 07.09.2002
(51) Int. Cl.: F02D 41/30, F02D 33/02, F02D 37/02

(54) **Verfahren und Vorrichtung zur Steuerung einer Brennkraftmaschine beim Wechsel zwischen zwei Betriebsarten**
Method and Apparatus for Controlling an Internal Combustion Engine during Changeover between two Combustion Modes
Procédé et Dispositiv de Commande d'un Moteur à Combustion Interne pendant l'échangement entre deux Modes de Combustion

(30) Priorität: 04.10.2001 DE 10148871
(43) Veröffentlichungstag der Anmeldung: 09.04.2003
(73) Patentinhaber: ROBERT BOSCH GMBH, 70442 Stuttgart (DE)
(72) Erfinder: Hartmann, Dirk, 70469 Stuttgart (DE); Eberle, Kristina, 71706 Hardthof (DE)

(56) Entgegenhaltungen:
- EP-A- 0 893 596
- EP-A- 0 922 847
- DE-A- 19 746 902
- DE-C- 19 824 915
- US-B1- 6 279 561

## Beschreibung

Die vorliegende Erfindung betrifft ein Verfahren zum Betreiben einer Brennkraftmaschine insbesondere eines Kraftfahrzeugs. Dabei wird Kraftstoff in einer ersten Betriebsart während einer Verdichtungsphase und in einer zweiten Betriebsart während einer Ansaugphase in einen Brennraum der Brennkraftmaschine eingespritzt. Bei dem Verfahren wird zwischen den Betriebsarten umgeschaltet. Zum Umschalten von der zweiten Betriebsart auf die erste Betriebsart wird eine Luftfüllung des Brennraums auf einen Endwert erhöht.

Die Erfindung betrifft außerdem ein Speicherelement für ein Steuergerät einer Brennkraftmaschine insbesondere eines Kraftfahrzeugs. Auf dem Speicherelement ist ein Computerprogramm abgespeichert, das auf einem Rechengerät, insbesondere auf einem Mikroprozessor, ablauffähig ist. Das Speicherelement ist insbesondere als ein Read-Only-Memory, als ein Random-Access-Memory oder als ein Flash-Memory ausgebildet.

Die vorliegende Erfindung betrifft des weiteren ein Computerprogramm, das auf einem Rechengerät, insbesondere auf einem Mikroprozessor, ablauffähig ist.

Außerdem betrifft die Erfindung ein Steuergerät für eine Brennkraftmaschine insbesondere eines Kraftfahrzeugs. Die Brennkraftmaschine ist mit mindestens einem Brennraum versehen, in den Kraftstoff in einer ersten Betriebsart während einer Verdichtungsphase und in einer zweiten Betriebsart während einer Ansaugphase einspritzbar ist. Das Steuergerät ist zur Umschaltung zwischen den Betriebsarten vorgesehen. Zum Umschalten von der zweiten Betriebsart auf die erste Betriebsart erhöht das Steuergerät eine Luftfüllung des Brennraums auf einen Endwert.

Schließlich betrifft die vorliegende Erfindung eine Brennkraftmaschine insbesondere für ein Kraftfahrzeug. Die Brennkraftmaschine ist mit mindestens einem Brennraum versehen, in den Kraftstoff in einer ersten Betriebsart während einer Verdichtungsphase und in einer zweiten Betriebsart während einer Ansaugphase einspritzbar ist. Die Brennkraftmaschine umfasst ein Steuergerät, das zwischen den Betriebsarten umschaltet. Zum Umschalten von der zweiten Betriebsart auf die erste Betriebsart erhöht das Steuergerät eine Luftfüllung des Brennraums auf einen Endwert.

### Stand der Technik

Aus der DE 198 24 915 C1 ist ein Verfahren zum Betreiben einer Brennkraftmaschine bekannt, bei dem nicht der Sollwertverlauf für die Luftfüllung der Brennräume, sondern vielmehr ein Verlauf des Drosselklappenwinkels vorgegeben wird. Dort wird eine zweistufige Umschaltung des Drosselklappenwinkels bei einem Betriebsartwechsel allerdings nur vom Magerbetrieb in den Homogenbetrieb beschrieben. Aus der EP 0 893 596 A2 ist ein Verfahren zum Betereiben einer Brennkraftmaschine beschrieben, bei dem zum Umschalten der Brennkraftmaschine von einem Homogenbetrieb in einen Magerbetrieb zunächst in einen mageren Homogenbetrieb geschaltet wird. Ein magerer Homogenbetrieb unterscheidet sich von einem reinen Homogenbetrieb durch die erhöhte Luftfüllung in den Brennräumen, wobei der Einspritzzeitpunkt und die in die Brennräume einzuspritzende Kraftstoffmasse nicht verändert werden, sondern auf einem im Wesentlichen konstanten, dem Homogenbetrieb entsprechenden Wert verbleiben.

Kraftstoffzumesssysteme zur direkten Einspritzung von Kraftstoff in den Brennraum einer Brennkraftmaschine sind allgemein bekannt. Beim Betrieb von Brennkraftmaschine, die mit derartigen Systemen ausgestattet sind, wird zwischen einer ersten Betriebsart, einem sog. Magerbetrieb, und einer zweiten Betriebsart, einem sog. Homogenbetrieb unterschieden. Im Homogenbetrieb herrscht in dem Brennraum ein Kraftstoff-Luft-Verhältnis Lambda von etwa Eins, in einer Magerbetriebsart ist Lambda größer als Eins, d. h. es herrscht ein deutlicher Luftüberschuss. Der Magerbetrieb wird insbesondere bei kleineren Lasten verwendet, während der Homogenbetrieb bei größeren, an der Brennkraftmaschine anliegenden Lasten zur Anwendung kommt. Der Magerbetrieb umfasst bspw. einen sog. Schichtbetrieb, einen homogenen Magerbetrieb u. a. Betriebsarten, bei denen Lambda größer Eins ist.

Im Schichtbetrieb wird der Kraftstoff während der Verdichtungsphase der Brennkraftmaschine in den Brennraum derart eingespritzt, dass sich im Zeitpunkt der Zündung eine Kraftstoffwolke in unmittelbarer Umgebung einer Zündkerze befindet. Diese Einspritzung kann auf unterschiedliche Weise erfolgen. So ist es möglich, dass die eingespritzte Kraftstoffwolke sich bereits während bzw. unmittelbar nach der Einspritzung bei der Zündkerze befindet und von dieser entzündet wird. Ebenfalls ist es möglich, dass die eingespritzte Kraftstoffwolke durch eine Ladungsbewegung zu der Zündkerze geführt und dann erst entzündet wird. Bei beiden Brennverfahren liegt keine gleichmäßige Kraftstoffverteilung vor, sondern eine Schichtladung.

Der Vorteil des Magerbetriebs liegt darin, dass dort mit einer sehr geringen Kraftstoffmasse die anliegenden kleineren Lasten von der Brennkraftmaschine ausgeführt werden können. Größere Lasten können allerdings nicht durch den Magerbetrieb erfüllt werden.

In dem für derartige größere Lasten vorgesehenen Homogenbetrieb wird der Kraftstoff während der Ansaugphase der Brennkraftmaschine eingespritzt, so dass eine Verwirbelung und damit eine Verteilung des Kraftstoffs in dem Brennraum noch ohne weiteres erfolgen kann. Insoweit entspricht der Homogenbetrieb etwa der Betriebsweise von Brennkraftmaschinen, bei denen in herkömmlicher Weise Kraftstoff in ein Ansaugrohr eingespritzt wird. Bei Bedarf kann auch bei kleineren Lasten der Homogenbetrieb eingesetzt werden.

Im Magerbetrieb wird die Drosselklappe in dem zu dem Brennraum führenden Ansaugrohr weit geöffnet und die Verbrennung wird im wesentlichen durch die eingespritzte Kraftstoffmasse gesteuert und/ oder geregelt. Im Homogenbetrieb wird die Drosselklappe in Abhängigkeit von dem angeforderten Moment geöffnet bzw. geschlossen, und die einzuspritzende Kraftstoffmasse wird in Abhängigkeit von der angesaugten Luftmasse, bzw. dem Drosselklappenwinkel, gesteuert und/ oder geregelt.

In beiden Betriebsarten, also im Magerbetrieb und im Homogenbetrieb, wird die einzuspritzende Kraftstoffmasse in Abhängigkeit zusätzlich von einer Mehrzahl weiterer Betriebsgrößen auf einen im Hinblick auf Kraftstoffeinsparung, Abgasreduzierung und dergl. optimalen Wert gesteuert und/ oder geregelt. Die Steuerung und/ oder Regelung ist dabei in den beiden Betriebsarten unterschiedlich.

Während des Betriebs der Brennkraftmaschine kann es erforderlich sein, die Brennkraftmaschine zwischen den Betriebsarten umzuschalten. Während im Magerbetrieb die Drosselklappe weit geöffnet ist und die Luft damit weitgehend entdrosselt zugeführt wird, ist die Drosselklappe im Homogenbetrieb nur teilweise geöffnet und vermindert damit die Zufuhr von Luft. Vor allem bei der Umschaltung vom Magerbetrieb in den Homogenbetrieb muss dabei die Fähigkeit des zu dem Brennraum führenden Ansaugrohrs berücksichtigt werden, Luft zu speichern. Wird dies nicht berücksichtigt, so kann das Umschalten zu einer Erhöhung des von der Brennkraftmaschine abgegebenen Moments führen.

Bei Brennkraftmaschinen der eingangs genannten Art ist es Ziel, die Brennkraftmaschine in den Magerbetriebsarten in möglichst ungedrosseltem Zustand zu betreiben. Nach dem Umschalten der Brennkraftmaschine vom Homogenbetrieb in eine Magerbetriebsart wird der Sollwert für die Luftfüllung auf einen Endwert angehoben, um einen ungedrosselten Zustand mit maximaler Füllung zu erreichen. Ziel ist es, die Brennkraftmaschine an der mageren Lambdagrenze (Lambda_max >> 1) zu betreiben.

Der vorliegenden Erfindung liegt die Aufgabe zugrunde, während der Umschaltung von der zweiten Betriebsart in die erste Betriebsart Momentensprünge möglichst klein zu halten und ein gewünschtes Sollmoment möglichst einzuhalten.

Zur Lösung dieser Aufgabe schlägt die vorliegende Erfindung ausgehend von dem Verfahren der eingangs genannten Art vor, dass die Luftfüllung des Brennraums während des Umschaltens von der zweiten Betriebsart auf die erste Betriebsart noch in der zweiten Betriebsart zunächst auf einen Zwischenwert erhöht wird und dann zum Umschalten auf die erste Betriebsart auf den Endwert eingestellt wird. Das erfindungsgemäße Verfahren ist in Anspruch 1 definiert.

### Vorteile der Erfindung

Der Zwischenwert kann in Abhängigkeit von bestimmten Betriebsgrößen der Brennkraftmaschine oder des Kraftfahrzeugs innerhalb bestimmter Grenzen frei gewählt werden. Eine Grenze wird bspw. von einem aus der Erhöhung der Luftfüllung resultierenden potentiellen Istmomentsprung gegeben, der eine vorgebbare Größe nicht überschreiten sollte. Andere Grenzen können bspw. durch die Fahrdynamik des Kraftfahrzeugs gegeben sein. Erfindungsgemäß wird also über den adaptiven Zwischenwert von einer für den Homogenbetrieb vorgesehenen Luftfüllung auf eine für den Magerbetrieb vorgesehene Luftfüllung umgeschaltet, wobei der Zwischenwert durchaus auch Werte oberhalb der Luftfüllung für den Magerbetrieb annehmen kann.

Genauer gesagt, wird die Brennkraftmaschine beim Umschalten von Homogenbetrieb auf eine Magerbetriebsart zunächst weiter im Homogenbetrieb bei einem Kraftstoff-LuftVerhaltnis Lambda gleich Eins betrieben. Gleichzeitig wird die Luftfüllung auf den Zwischenwert erhöht. Ein Anstieg der Luftfüllung führt aufgrund des Lambda-gleich-Eins-Betriebs zu einem Anstieg der in den Brennraum einzuspritzenden Kraftstoffmasse und damit zu einem Momentenanstieg. Dieser Anstieg des Istmoments muss auf geeignete Weise vermindert, idealerweise sogar kompensiert werden. Eine Möglichkeit einer Momentenverringerung besteht bspw. in einer Verstellung des Zündwinkels nach spät. Anschließend wird in eine Magerbetriebsart bei Lambda größer Eins umgeschaltet, wobei die Luftmasse auf den Endwert angehoben wird. Ein Momentenanstieg aufgrund eines (Luft-) Füllungsanstiegs in der Magerbetriebsart kann über ein Anheben von Lambda kompensiert werden.

Während des Homogenbetriebs mit erhöhter Luftfüllung werden die neuen Parameter für den bevorstehenden Magerbetrieb der Brennkraftmaschine vorbereitet und die Aktoren entsprechend angesteuert. Bevor die Brennkraftmaschine in den Magerbetrieb umgeschaltet werden kann, vergeht einige Zeit. Aus diesem Grund darf die Luftfüllung den Endwert nicht zu schnell erreichen und muss u. U. einige Zeit auf dem Zwischenwert verharren, bevor sie auf den Endwert eingestellt und die Brennkraftmaschine in die Magerbetriebsart umgeschaltet wird. Die Luftfüllung wird bereits im Homogenbetrieb angehoben, damit die Luftfüllung einen minimalen Grenzwert für die Luftfüllung in der Magerbetriebsart möglichst schnell erreicht und der Umschaltvorgang möglichst kurz ist.

Durch eine geeignete Wahl des Zwischenwerts kann der Umschaltvorgang von Homogenbetrieb auf Magerbetrieb gezielt beeinflusst werden. Durch die vorliegende Erfindung ergibt sich somit eine deutlich reduzierte Belastung der Brennkraftmaschine und eine verbesserte Fahrbahrkeit eines Kraftfahrzeugs.

Gemäß einer vorteilhaften Weiterbildung der vorliegenden Erfindung wird vorgeschlagen, dass der Zwischenwert für die Luftfüllung des Brennraums in Abhängigkeit von einem Zündwinkel während des Umschaltens für ein in dem Brennraum enthaltenes Kraftstoff-Luft-Gemisch gewählt wird. Über den Zündwinkel kann ein von der Brennkraftmaschine abgegebenes Moment beeinflusst werden. Bei Verstellung des Zündwinkels in Richtung "spät" kann Leistung der Brennkraftmaschine vernichtet werden. Bei Verstellung in Richtung "früh" kann kurzzeitig eine Leistungssteigerung erzielt werden. Bei einem gegebenen Zündwinkel, bspw. dem spätest möglichen Zündwinkel, kann der Zwischenwert für die Füllung des Brennraums mit Luft derart gewählt werden, dass ein Momentensprung beim Umschalten der Brennkraftmaschine vom Homogenbetrieb in den Magerbetrieb minimiert, vorzugsweise sogar kompensiert wird. Natürlich kann anders herum auch der Zündwinkel derart in Abhängigkeit von dem Zwischenwert für die Luftfüllung bestimmt werden, dass der Momentensprung bei einem gegebenen Zwischenwert minimiert wird.

Gemäß einer bevorzugten Ausführungsform der Erfindung wird vorgeschlagen, dass der Zwischenwert in Abhängigkeit des während des Umschaltens spätest möglichen Zündwinkels gewählt wird. Unter spätest möglichen Zündwinkeln werden auch sehr späte Zündwinkel verstanden, bei denen der Wirkungsgrad der Verbrennung schlecht ist und die Motorleistung stark zurückgeht, und mit denen eine Brennkraftmaschine über einen längeren Zeitraum hinweg normalerweise nie betrieben würde. Es ist jedoch ohne weiteres denkbar, die Brennkraftmaschine für einen kurzen Zeitraum während des Umschaltvorgangs von Homogen- auf Magerbetrieb, der in der Regel bei einem Bruchteil einer Sekunde liegt, mit einem solchen späten Zündwinkel zu betreiben. Gemäß dieser Ausführungsform wird der Zwischenwert wird also so hoch gewählt, dass ein Anstieg der Luftfüllung auf den Zwischenwert zu einem Istmomentsprung führt, der durch Zündwinkelspätverstellung gerade noch kompensiert werden kann, zumindest aber noch innerhalb tolerierbarer Grenzen liegt.

Vorteilhafterweise wird der Zwischenwert derart gewählt, dass ein von der Erhöhung der Luftfüllung auf den Zwischenwert resultierender potentieller Istmomentensprung durch eine Verstellung des Zündwinkels nach spät derart verringert werden kann, dass der Momentensprung innerhalb vorgebbarer Toleranzgrenzen liegt, idealerweise gleich Null ist. Die Toleranzgrenzen entsprechen dem gerade noch tolerierbaren Istmomentensprung. Sie können beliebig vorgegeben werden. Denkbar ist bspw. eine feste Vorgabe oder aber eine Vorgabe in Abhängigkeit von bestimmten Betriebsgrößen der Brennkraftmaschine, bspw. von einer momentan eingelegten Getriebestufe, von einer momentanen Fahrzeuggeschwindigkeit, momentan eingestellter Stoßdämpfercharakteristik, etc.

Vorzugsweise wird der Zwischenwert um ein Maß für einen tolerierbaren Momentensprung beim Umschalten der Betriebsart von der zweiten Betriebsart auf die erste Betriebsart erhöht. Dies wird aus dem folgenden Gründen gemacht:

Die Brennkraftmaschine kann nur dann momentenneutral, d. h. ohne einen resultierenden Istmomentensprung, von Homogenbetrieb auf Magerbetrieb umgeschaltet werden, wenn ein erster Bereich zwischen dem Zwischenwert und der Luftfüllung im Homogenbetrieb einen zweiten Bereich zwischen der maximalen Luftfüllung im Magerbetrieb (magere Lambdagrenze) und der minimalen Luftfüllung im Magerbetrieb (fette Lambdagrenze) überschneidet. Mit anderen Worten ist ein momentenneutrales Umschalten nur möglich, falls der Zwischenwert größer als die minimale Luftfüllung im Magerbetrieb ist.

Es ist aber auch der Fall denkbar, dass zwar nicht momentenneutral umgeschaltet werden kann, dass jedoch der Istmomentensprung beim Umschalten noch innerhalb tolerierbarer Grenzen (z. B. 10 Nm) liegt. Dieser Momentensprung entspricht einer bestimmten Luftmenge, d. h. die Luftmenge ist ein Maß für den tolerierbaren Momentensprung. Wenn nun der um die Luftmenge erhöhte Zwischenwert größer als die minimale Luftfüllung im Magerbetrieb ist, ist ein Umschalten der Brennkraftmaschine mit einem tolerierbaren Momentensprung möglich. Falls bereits der Zwischenwert an sich größer als die minimale Luftfüllung im Magerbetrieb war, ist der um die Luftmenge erhöhte Zwischenwert auf jeden Fall auch größer als die minimale Luftfüllung im Magerbetrieb, und ein momentenneutrales Umschalten ist möglich.

Vorzugsweise wird das Umschalten von der zweiten Betriebsart auf die erste Betriebsart verboten, falls der um das Maß für einen tolerierbaren Momentensprung beim Umschalten der Betriebsart erhöhte Zwischenwert nicht größer als ein minimaler Wert für die Luftfüllung in der ersten Betriebsart ist.

Von besonderer Bedeutung ist die Realisierung des erfindungsgemäßen Verfahrens in der Form eines Speicherelements, das für ein Steuergerät einer Brennkraftmaschine insbesondere eines Kraftfahrzeugs vorgesehen ist. Auf dem Speicherelement ist ein Computerprogramm abgespeichert, das auf einem Rechengerät, insbesondere auf einem Mikroprozessor, ablauffähig und zur Ausführung des erfindungsgemäßen Verfahrens geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt wie das Verfahren, zu dessen Ausführung das Programm geeignet ist. Als Speicherelement kann insbesondere ein elektrisches Speichermedium zur Anwendung kommen, bspw. ein Read-Only-Memory, ein Random-Access-Memory oder ein Flash-Memory.

Die Erfindung betrifft auch ein Computerprogramm, das auf einem Rechengerät, insbesondere auf einem Mikroprozessor, ablauffähig ist. Das Computerprogramm ist zur Ausführung des erfindungsgemäßen Verfahrens geeignet, wenn es auf dem Rechengerät abläuft. Das Computerprogramm ist vorzugsweise auf einem Speicherelement, insbesondere auf einem Flash-Memory, abgespeichert.

Als eine weitere Lösung der Aufgabe der vorliegenden Erfindung wird ausgehend von dem Steuergerät der eingangs genannten Art vorgeschlagen, dass das Steuergerät die Luftfüllung des Brennraums während des Umschaltens von der zweiten Betriebsart auf die erste Betriebsart noch in der zweiten Betriebsart zunächst auf einen Zwischenwert erhöht, die Luftfüllung bis zum Umschalten auf die erste Betriebsart auf dem Zwischenwert beläßt und die Luftfüllung dann zum Umschalten auf die erste Betriebsart auf den Endwert einstellt.

Gemäß einer vorteilhaften Weiterbildung der Erfindung wird vorgeschlagen, dass das Steuergerät Mittel zur Ausführung des erfindungsgemäßen Verfahrens nach einem der Ansprüche 2 bis 7 aufweist.

Als noch eine weitere Lösung der Aufgabe der vorliegenden Erfindung wird vorgeschlagen, dass die Brennkraftmaschine über das Steuergerät die Luftfüllung des Brennraums während des Umschaltens von der zweiten Betriebsart auf die erste Betriebsart noch in der zweiten Betriebsart zunächst auf einen Zwischenwert erhöht, die Luftfüllung bis zum Umschalten auf die erste Betriebsart auf dem Zwischenwert beläßt und die Luftfüllung dann zum Umschalten auf die erste Betriebsart auf den Endwert einstellt.

Gemäß einer vorteilhaften Weiterbildung der Erfindung wird vorgeschlagen, dass die Brennkraftmaschine Mittel zur Ausführung des erfindungsgemäßen Verfahrens nach einem der Ansprüche 2 bis 7 aufweist.

### Zeichnungen

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeicnung. Es zeigen:
- Figur 1: ein schematischen Blockschaltbild einer erfindungsgemäßen Brennkraftmaschine gemäß einer bevorzugten Ausführungsform;
- Figur 2: einen zeitlichen Verlauf einer Sollfüllung eines Brennraums der Brennkraftmaschine mit Luft gemäß dem erfindungsgemäßen Verfahren nach einem 1. Fall;
- Figur 3: einen zeitlichen Verlauf einer Sollfüllung eines Brennraums der Brennkraftmaschine mit Luft gemäß dem erfindungsgemäßen Verfahren nach einem 2. Fall; und
- Figur 4 ein Ablaufdiagramm eines erfindungsgemäßen: Verfahrens gemäß einer bevorzugten Ausführungsform.

### Beschreibung der Ausführungsbeispiele

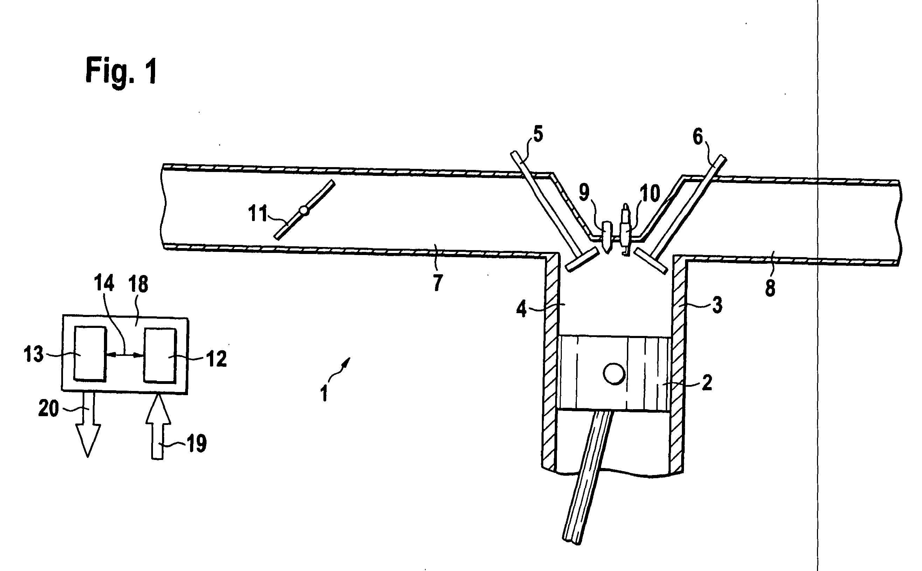

In Figur 1 ist eine Brennkraftmaschine 1 eines Kraftfahrzeugs dargestellt, bei der ein Kolben 2 in einem Zylinder 3 hin- und herbewegbar ist. Der Zylinder 3 ist mit einem Brennraum 4 versehen, der unter anderem durch den Kolben 2, ein Einlassventil 5 und ein Auslassventil 6 begrenzt ist. Der Kolben 2 wird durch Verbrennung von Kraftstoff in dem Brennraum 4 in eine Hin- und Herbewegung versetzt, die auf eine (nicht dargestellte) Kurbelwelle übertragen wird und auf diese ein Drehmoment ausübt. Mit dem Einlässventil 5 ist ein Ansaugrohr 7 und mit dem Auslassventil 6 ist ein Abgasrohr 8 gekoppelt.

Im Bereich des Einlassventils 5 und des Auslassventils 6 ragen ein Einspritzventil 9 und eine Zündkerze 10 in den Brennraum 4. Über das Einspritzventil 9 kann Kraftstoff in den Brennraum 4 eingespritzt werden. Mit der Zündkerze 10 kann der Kraftstoff in dem Brennraum 4 entzündet werden. Die Brennkraftmaschine 1 kann mehrere Zylinder 3 der dargestellten Art umfassen.

In dem Ansaugrohr 7 ist eine drehbare Drosselklappe 11 untergebracht, über die dem Ansaugrohr 7 Luft zuführbar ist. Die Menge der zugeführten Luft ist abhängig von der Winkelstellung der Drosselklappe 11.

Ein Steuergerät 18 ist von Eingangssignalen 19 beaufschlagt, die mittels Sensoren gemessene Betriebsgrößen der Brennkraftmaschine 1, anderer Aggregate des Kraftfahrzeugs oder des Kraftfahrzeugs selbst darstellen. Bspw. ist das Steuergerät 18 mit einem Luftmassensensor, einem Lambda-Sensor, einem Drehzahlsensor und dgl. verbunden. Des weiteren ist das Steuergerät 18 mit einem Fahrpedalsensor verbunden, der ein Signal erzeugt, das die Stellung eines von einem Fahrer des Kraftfahrzeugs betätigbaren Fahrpedals und damit das angeforderte Drehmoment angibt. Das Steuergerät 18 erzeugt Ausgangssignale 20, mit denen über Aktoren bzw. Steller das Verhalten der Brennkraftmaschine 1 beeinflusst werden kann. Bspw. ist das Steuergerät 18 mit dem Einspritzventil 9, der Zündkerze 10 und der Krosselklappe 11 und dgl. verbunden und erzeugt die zu deren Ansteuerung erforderlichen Signale.

Unter anderem ist das Steuergerät 18 dazu vorgesehen, die Betriebsgrößen der Brennkraftmaschine 1 zu steuern und/oder zu regeln. Bspw. wird die von dem Einspritzventil 9 in den Brennraum 4 eingespritzte Kraftstoffmasse von dem Steuergerät 18 insbesondere im Hinblick auf einen geringen Kraftstoffverbrauch und/ oder eine geringe Schadstoffentwicklung gesteuert und/ oder geregelt. Zu diesem zweck ist das Steuergerät 18 mit einem Mikroprozessor 12 versehen, der in einem Speichermedium 13, insbesondere in einem Flash-Memory, ein Computerprogramm abgespeichert hat, das dazu geeignet ist, die genannte Steuerung und/ oder Regelung durchzuführen. Zum Abarbeiten des Computerprogramms auf dem Mikroprozessor 12, wird das Computerprogramm entweder insgesamt oder befehlsweise über eine Datenübertragungsverbindung 14 von dem Speichermedium 13 an den Mikroprozessor 12 übertragen. Über diese Datenübertragungsverbindung 14 können auch im Rahmen der Steuerung und/ oder Regelung gewonnene Größen von dem Mikroprozessor 12 an das Speichermedium 13 übertragen und dort abgespeichert werden.

Die Brennkraftmaschine 1 aus Figur 1 kann in einer Vielzahl unterschiedlicher Betriebsarten betrieben werden. So ist es möglich, die Brennkraftmaschine 1 in einem Homogenbetrieb, einem Magerbetrieb, einem homogenen Magerbetrieb und dgl. zu betreiben.

Im Homogenbetrieb wird der Kraftstoff während der Ansaugphase von dem Einspritzventil 9 direkt in den Brennraum 4 der Brennkraftmaschine 1 eingespritzt. Der Kraftstoff wird dadurch bis zur Zündung noch weitgehend verwirbelt, so dass im Brennraum 4 ein im Wesentlichen homogenes Kraftstoff-Luft-Gemisch entsteht. Das zu erzeugende Moment wird dabei im Wesentlichen über die Stellung der Drosselklappe 11 von dem Steuergerät 18 eingestellt. In dem Steuergerät 18 wird in Abhängigkeit von der Luftfüllung des Brennraums 4 die entsprechende Kraftstoffmasse berechnet und ein Ansteuersignal für das Einspritzventil 9 ermittelt. Im Homogenbetrieb werden die Betriebsgrößen der Brennkraftmaschine 1 derart gesteuert und/ oder geregelt, dass das Kraftstoff-Luft-Verhältnis Lambda gleich Eins ist. Der Homogenbetrieb wird insbesondere bei Volllast angewendet.

Der homogene Magerbetrieb entspricht weitgehend dem homogenbetrieb, es wird jedoch das Lambda auf einen Wert größer Eins eingestellt.

Im Magerbetrieb wird Kraftstoff während der Verdichtungsphase von dem Einspritzventil 9 direkt in den Brennraum 4 der Brennkraftmaschine 1 eingespritzt. Damit ist bei der Zündung durch die Zündkerze 10 kein homogenes Gemisch im Brennraum 4 vorhanden, sondern eine Kraftstoffschichtung. Die Drosselklappe 11 kann, abgesehen von Anforderungen z. B. einer Abgasrückführung und/ oder einer Tankentlüftung, vollständig geöffnet und die Brennkraftmaschine 1 damit entdrosselt betrieben werden. Das zu erzeugende Moment wird im Magerbetrieb weitgehend über die eingespritzte Kraftstoffmasse eingestellt. Mit dem Magerbetrieb kann die Brennkraftmaschine 1 insbesondere im Leerlauf und bei Teillast betrieben werden.

Zwischen den genannten Betriebsarten der Brennkraftmaschine 1 kann umgeschaltet werden. Derartige Umschaltungen werden von dem Steuergerät 18 in Abhängigkeit von den Eingangssignalen 19 durchgeführt.

Bei einer Brennkraftmaschine 1 ist es Ziel, die Brennkraftmaschine 1 in den Magerbetriebsarten in möglichst ungedrosseltem Zustand zu betreiben. Während des Umschaltens der Brennkraftmaschine 1 vom Homogenbetrieb in eine Magerbetriebsart wird der Sollwert rlsol für die Luftfüllung auf einen Zwischenwert rlmdmxh angehoben. Am Ende der Umschaltung wird der Sollwert rlsol auf einen Endwert rlmdhmms angehoben, um einen ungedrosselten Zustand mit maximaler Füllung rlmdhmms zu erreichen. Ziel ist es, die Brennkraftmaschine 1 an der mageren Lambdagrenze (Lambda_max >> 1) zu betreiben.

Die Anhebung des Sollwerts rlsol der Luftfüllung erfolgt bereits im Homogenbetrieb, damit der Istwert rlist möglichst schnell eine minimale Luftfüllung rlmdhm_min für den Magerbetrieb erreicht und in die Magerbetriebsart umgeschaltet werden kann. Um das von der Brennkraftmaschine 1 abgegebene Moment im Homogenbetrieb trotz der Anhebung der Luftfüllung rlsol auf den Zwischenwert rlmdmxh konstant zu halten, wird das von der Anhebung der Luftfüllung rlsol resultierende Moment durch eine Verstellung des Zündwinkels nach spät kompensiert.

Gemäß der vorliegenden Erfindung wird der Zwischenwert rlmdmxh für die Luftfüllung des Brennraums 4 in Abhängigkeit von einem spätest möglichen Zündwinkel für ein in dem Brennraum 4 enthaltenes Kraftstoff-Luft-Gemisch oder der Zündwinkel in Abhängigkeit von dem Zwischenwert rlmdmxh für die Luftfüllung gewählt. Das hat den Vorteil, dass Momentensprünge, während der Umschaltung von einer Homogenbetriebsart in eine Magerbetriebsart auftreten können, möglichst klein gehalten werden können und dass ein gewünschtes Sollmoment auch während der Umschaltung eingehalten werden kann.

Beim Umschalten der Brennkraftmaschine 1 von einer Homogenbetriebsart in eine Magerbetriebsart wird die Luftfüllung des Brennraums 4 noch während des Homogenbetriebs auf den adaptiv festzulegenden Zwischenwert rlmdmxh angehoben. Dieser Zwischenwert rlmdmxh wird u.a. in Abhängigkeit von einem spätest möglichen Zündwinkel für ein in dem Brennraum 4 befindliches Kraftstoff-Luft-Gemisch gewählt. Über den Zündwinkel kann ein von der Brennkraftmaschine 1 abgegebenes Moment beeinflusst werden. Bei Verstellung des Zündwinkels in Richtung "spät" geht die Leistung der Brennkraftmaschine 1 zurück. Bei Verstellung in Richtung "früh" kann kurzzeitig eine Leistungssteigerung erzielt werden. Bei einem gegebenen Zündwinkel kann der Zwischenwert rlmdmxh für die Füllung des Brennraums 4 mit Luft derart gewählt werden, dass ein Momentensprung beim Umschalten der Brennkraftmaschine 1 vom Homogenbetrieb in den Magerbetrieb minimiert, vorzugsweise sogar kompensiert wird. Natürlich kann anders herum auch der Zündwinkel derart in Abhängigkeit von dem Zwischenwert rlmdmxh für die Luftfüllung bestimmt werden, dass der Momentensprung bei einem gegebenen Zwischenwert rlmdmxh minimiert wird. Durch die vorliegende Erfindung ergibt sich eine deutlich reduzierte Belastung der Brennkraftmaschine 1 und eine verbesserte Fahrbahrkeit eines Kraftfahrzeugs.

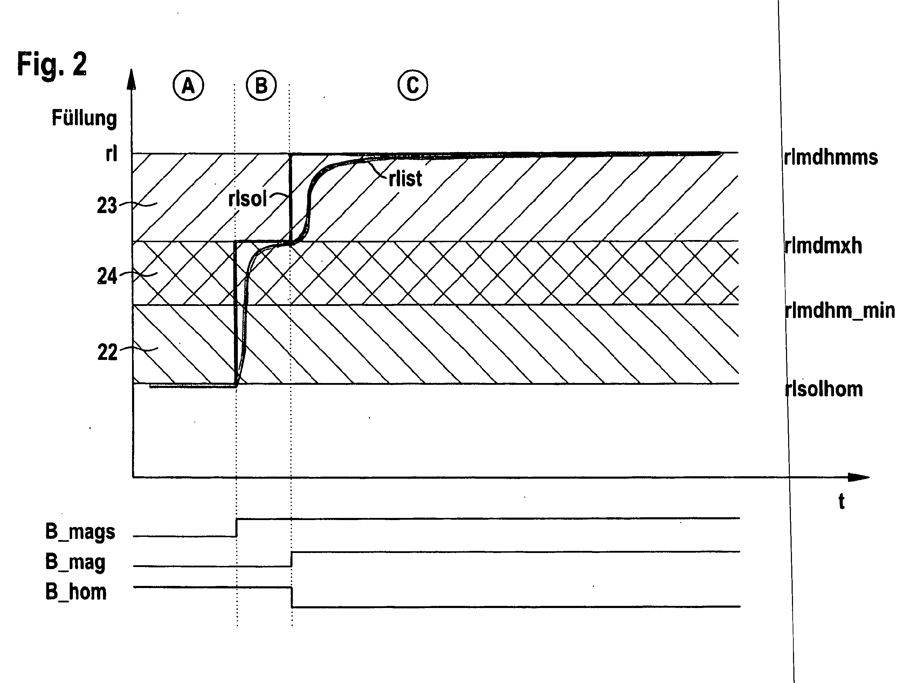

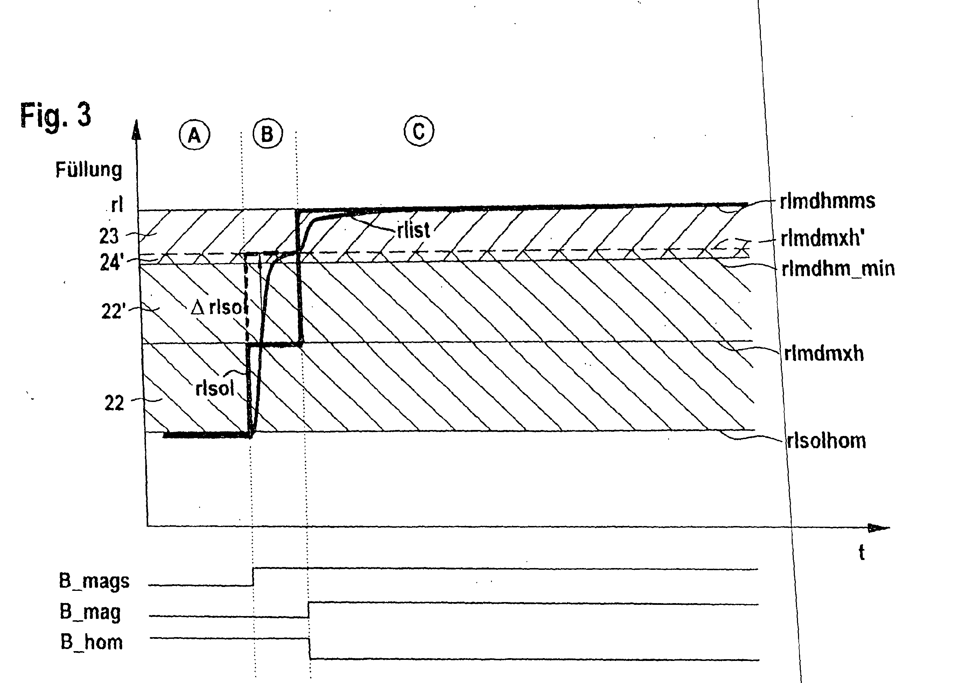

Die vorliegende Erfindung umfasst zwei Fälle, einen ersten Fall (Figur 2), bei dem beim Umschalten von Homogenbetrieb in Magerbetrieb kein potentieller Istmomentsprung auftreten würde, und einen zweiten Fall (Figur 3), bei dem beim Umschalten der potentielle Istmomentsprung auftreten würde.

In dem ersten Fall aus Figur 2 wird die Brennkraftmaschine 1 zunächst (Bereich A) im Homogenbetrieb betrieben (Betriebsart homogen B_hom auf 1, Betriebsart mager B_mag auf 0, Sollanforderung Betriebsart mager B_mags auf 0). Der Sollwert rlsol für die Luftfüllung ist auf einem Wert rlsolhom für den Homogenbetrieb. Der Verlauf des Istwerts für die Luftfüllung ist mit rlist bezeichnet.

Dann soll die Brennkraftmaschine 1 auf Magerbetrieb umgeschaltet werden (Bereich B). Dazu wird zunächst das Signal Sollanforderung Betriebsart mager B_mags auf 1 gesetzt. Der Sollwert rlsol für die Luftfüllung wird auf den Zwischenwert rlmdmxh hochgesetzt. Der Zwischenwert rlmdmxh liegt oberhalb der im Magerbetrieb geforderten minimalen Luftfüllung rlmdhm_min. Der Zwischenwert rlmdmxh liegt also zwischen der fetten Lambdagrenze (Lambda_min > 1) und der mageren Lambdagrenze rlmdhmms (Lambda_max >> 1).

In dem Bereich B wird die Brennkraftmaschine 1 weiter im Homogenbetrieb bei einem Kraftstoff-Luft-Verhältnis Lambda gleich Eins betrieben. Gleichzeitig wird die Luftfüllung rlsol auf den Zwischenwert rlmdmxh erhöht. Der Anstieg der Luftfüllung rlsol führt aufgrund des Lambda-gleich-Eins-Betriebs zu einem Anstieg der in den Brennraum 4 einzuspritzenden Kraftstoffmasse und damit zu einem Momentenanstieg. Dieser Anstieg des Istmoments wird durch eine Verstellung des Zündwinkels nach spät kompensiert. Der Zwischenwert rlmdmxh ist derart gewählt, dass der durch den Anstieg der Luftfüllung rlsol resultierende Momentensprung durch einen spätest möglichen Zündwinkel jederzeit kompensiert werden kann. Dabei bleibt das resultierende Istmoment aus der erhöhten Füllung und des geringeren Zündwinkelwirkungsgrades konstant.

Der Übergang in den Magerbetrieb (Bereich C) wird durch das Signal Betriebsart mager B_mag auf 1 eingeleitet. Der Sollwert rlsol wird auf die im Magerbetrieb geforderte ungedrosselte Sollfüllung rlmdhmms eingestellt. Ein Momentenanstieg in der Magerbetriebsart B_mag aufgrund eines (Luft-) Füllungsanstiegs kann über ein Anheben von Lambda kompensiert werden.

In Figur 2 ist ein erster Bereich zwischen dem Zwischenwert rlmdmxh und der Luftfüllung rlsolhom im Homogenbetrieb mit dem Bezugszeichen 22 bezeichnet. Ein zweiter Bereich zwischen der maximalen Luftfüllung rlmdhmms im Magerbetrieb B_mag (magere Lambdagrenze Lambda_max >> 1) und der minimalen Luftfüllung rlmdhm_min im Magerbetrieb (fette Lambdagrenze Lambda_min > 1) ist mit dem Bezugszeichen 23 bezeichnet. Die Schnittmenge dieser beiden Bereiche 22, 23 ist mit 24 bezeichnet. Falls - wie in Figur 2 - eine Schnittmenge 24 vorhanden ist, kann die Brennkraftmaschine 1 momentenneutral, d. h. ohne einen resultierenden Istmomentensprung, von Homogenbetrieb auf Magerbetrieb umgeschaltet werden. Mit anderen Worten ist ein momentenneutrales Umschalten nur möglich, falls der Zwischenwert rlmdmxh größer als die minimale Luftfüllung rlmdhm_min im Magerbetrieb B_mag ist.

Bei dem zweiten Fall in Figur 3 wird zum Umschalten der Betriebsart von Homogenbetrieb B_hom auf Magerbetrieb B_mag wie bei dem ersten Fall aus Figur 2 vorgegangen. Allerdings ist der Zwischenwert rlmdmxh kleiner als die im Magerbetrieb B_mag geforderte minimale Luftfüllung rlmdhm_min.

Eine Schittmenge 24 ist in diesem Fall nicht vorhanden und beim Umschalten der Betriebsart würde trotz einer Spätverstellung des Zündwinkels ein Istmomentensprung auftreten. In dem zweiten Fall wird deshalb ein Maß delta_rlsol für einen tolerierbaren Momentensprung zu dem Zwischenwert rlmdmxh addiert. Das Maß delta_rlsol ist eine dem tolerierbaren Momentensprung (z. B. 10 Nm) entsprechende Luftmenge. Dadurch wird der Zwischenwert rlmdmxh auf einen Wert rlmdmxh' angehoben. Der Istwert rlist nähert sich nun asymptotisch dem neuen Wert rlmdmxh'. Der erste Bereich wird zu dem mit 22' bezeichneten Bereich vergrößert. In dem zweiten Fall ergibt sich nun eine Schnittmenge 24' zwischen dem Bereich 22' und dem zweiten Bereich 23. Das bedeutet, dass bei dem Ausführungsbeispiel aus Figur 3 die Betriebsart der Brennkraftmaschine 1 mit einem tolerierbaren Momentensprung von Homogenbetrieb auf Magerbetrieb umgeschaltet werden kann. Auch in dem ersten Fall aus Figur 2 kann das Maß delta_rlsol zu dem Zwischenwert rlmdmxh addiert werden.

Falls sich trotz Erhöhung des Zwischenwerts rlmdmxh um das Maß delta_rlsol keine Schnittmenge 24' zwischen dem Bereich 22' und dem zweiten Bereich 23 ergibt, kann nur mit einem Istmomentsprung umgeschaltet weden, der außerhalb tolerierbarer Grenzen liegt. In einem solchen Fall kann das Umschalten der Betriebsart von Homogenbetrieb auf eine Magerbetriebsart verboten werden.

Das gesamte erfindungsgemäße Verfahren wird in dem Steuergerät 18 der Brennkraftmaschine 1 ausgeführt, indem ein geeignetes Computerprogramm auf dem Mikroprozessor 12 abgearbeitet wird. Das Computerprogramm ist in dem Speicherelement 13 abgelegt und wird zur Abarbeitung über die Datenübertragungsverbindung 14 an den Mikroprozessor 12 übertragen.

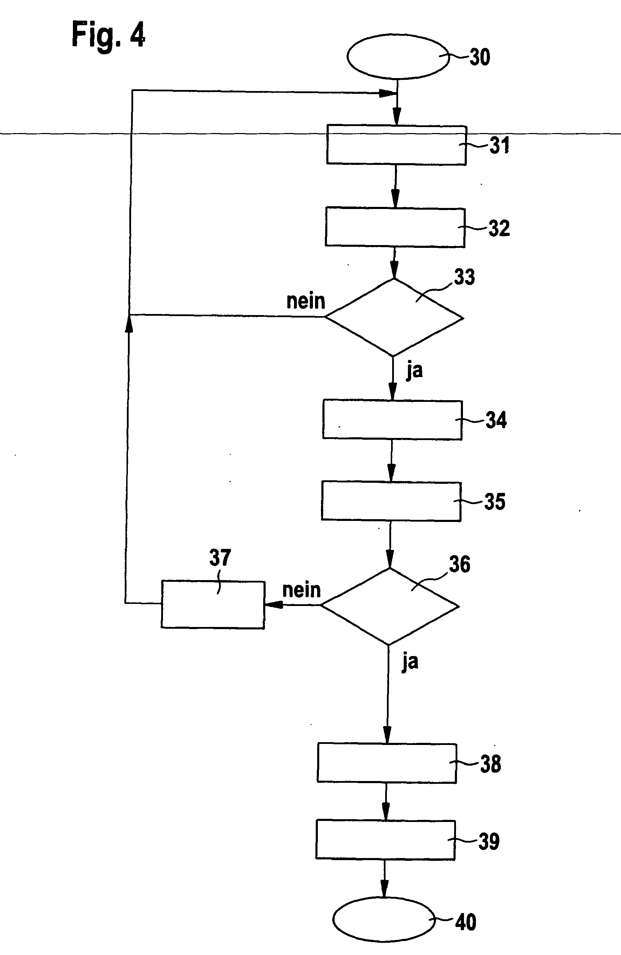

Ein Ablaufdiagramm des erfindungsgemäßen Verfahrens gemäß dem zweiten Fall ist in Figur 4 dargestellt. Das Verfahren beginnt in einem Funktionsblock 30. In einem Funktionsblock 31 werden die Eingangsgrößen 19 eingelesen. Anhand der Eingangsgrößen 19 wird in einem Funktionsblock 32 die Betriebsart ermittelt, in der die Brennkraftmaschine 1 unter dem Gesichtspunkt eines reduzierten Kraftstoffverbrauchs, einer reduzierten Schadstoffemission und einer reduzierten Geräuschentwicklung betrieben werden sollte. In dem vorliegenden Ausführungsbeispiel wird die Brennkraftmaschine 1 zunächst im Homogenbetrieb betrieben. In einem Abfrageblock 33 wird überprüft, ob die Betriebsart vom Homogenbetrieb in den Magerbetrieb umgeschaltet werden sollte. Falls nein, wird das Verfahren beim Funktionsblock 31 fortgesetzt.

Falls jedoch in den Magerbetrieb umgeschaltet werden soll, wird in einem Funktionsblock 34 das Signal B_mags auf 1 gesetzt. In einem Funktionsblock 35 wird der Zwischenwert rlmdmxh um das Maß delta_rlsol für einen tolerierbaren Momentensprung angehoben. In einem Abfrageblock 36 wird überprüft, ob eine Schnittmenge 24' vorhanden ist, d. h. ob die Brennkraftmaschine 1 momentenneutral oder mit einem tolerierbaren Moment in den Magerbetrieb umgeschaltet werden kann. Dazu wird der um das Maß delta_rlsol erhöhte Zwischenwert rlmdmxh' mit der für den Magerbetrieb geforderten minimalen Luftmasse rlmdhm_min verglichen. Falls keine Schnittmenge 24' vorhanden ist, wird von einem zu großen potentiellen Istmomentsprung ausgegangen. In diesem Fall wird der Magerbetrieb in einem Funktionsblock 37 verboten. Die Brennkraftmaschine 1 wird weiterhin im Homogenbetrieb betrieben.

Falls in dem Abfrageblock 36 festgestellt wird, dass eine Schnittmenge 24' exisitiert, wird zu einem Funtkionsblock 38 verzweigt, wo in den Magerbetrieb umgeschaltet und das Signal B_hom auf 0 und das Signal B_mag auf 1 gesetzt wird. In einem Funktionsblock 39 wird der Sollwert rlsol der Luftfüllung auf den für den Betrieb an der mageren Lambdagrenze (Lambda_max >> 1) maximal zulässigen Wert rlmdhmms angehoben. Damit ist der Umschaltvorgang beendet und das erfindungsgemäße Verfahren endet in einem Funktionsblock 40.

## Patentansprüche

1. Verfahren zum Betreiben einer Brennkraftmaschine (1) insbesondere eines Kraftfahrzeugs, bei dem Kraftstoff in einer ersten Betriebsart (B_mag) während einer Verdichtungsphase und in einer zweiten Betriebsart (B_hom) während einer Ansaugphase in einen Brennraum (4) der Brennkraftmaschine (1) eingespritzt wird, und bei dem zwischen den Betriebsarten (B_mag, B_hom) umgeschaltet wird, wobei zum Umschalten von der zweiten Betriebsart (B_hom) auf die erste Betriebsart (B_mag) eine Luftfüllung (rlsol) des Brennraums (4) auf einen Endwert (rlmdhmms) erhöht wird, **dadurch gekennzeichnet, dass** die Luftfüllung (rlsol) des Brennraums (4) während des Umschaltens von der zweiten Betriebsart (B_hom) auf die erste Betriebsart (B_mag) noch in der zweiten Betriebsart (B_hom) bei einem Kraftstoff-Luft-Verhältnis Lambda gleich Eins zunächst auf einen Zwischenwert (rlmdmxh) erhöht wird, die Luftfüllung (rlsol) bis zum Umschalten auf die erste Betriebsart (B_mag) auf dem Zwischenwert (rlmdmxh) belassen wird und die Luftfüllung (rlsol) dann zum Umschalten auf die erste Betriebsart (B_mag) auf den Endwert (rlmdhmms) eingestellt wird.

2. Verfahren nach Anspruch 1, **dadurch gekennzeichnet, dass** der Zwischenwert (rlmdmxh) für die Luftfüllung (rlsol) des Brennraums (4) in Abhängigkeit von einem Zündwinkel während des Umschaltens für ein in dem Brennraum (4) enthaltenes Kraftstoff-Luft-Gemisch gewählt wird.

3. Verfahren nach Anspruch 2, **dadurch gekennzeichnet, dass** der Zwischenwert (rlmdmxh) in Abhängigkeit des während des Umschaltens spätest möglichen Zündwinkels gewählt wird.

4. Verfahren nach Anspruch 2 oder 3, **dadurch gekennzeichnet, dass** der Zwischenwert (rlmdmxh) derart gewählt wird, dass ein von der Erhöhung der Luftfüllung (rlsol) auf den Zwischenwert (rlmdmxh) resultierender potentieller Istmomentensprung durch eine Verstellung des Zündwinkels nach spät derart verringert werden kann, dass der Momentensprung innerhalb vorgebbarer Toleranzgrenzen liegt, idealerweise gleich Null ist.

5. Verfahren nach Anspruch 4, **dadurch gekennzeichnet, dass** der Zwischenwert (rlmdmxh) derart gewählt wird, dass der von der Erhöhung der Luftfüllung (rlsol) auf den Zwischenwert (rlmdmxh) resultierende potentielle Istmomentensprung durch eine Verstellung des Zündwinkels nach spät komponsiert werden kann.

6. Verfahren nach Anspruch 2 oder 3, **dadurch gekennzeichnet, dass** der Zwischenwert (rlmdmxh) um ein Maß (delta_rlsol) für einen tolerierbaren Momentensprung beim Umschalten der Betriebsart von der zweiten Betriebsart (B_hom) auf die erste Betriebsart (B_mag) erhöht wird.

7. Verfahren nach Anspruch 6, **dadurch gekennzeichnet, dass** das Umschalten von der zweiten Betriebsart (B_hom) auf die erste Betriebsart (B_mag) verboten wird, falls der um das Maß (delta_rlsol) erhöhte Zwischenwert (rlmdmxh) nicht größer als ein minimaler Wert (rlmdhm_min) für die Luftfüllung in der ersten Betriebsart (B_mag) ist.

8. Speicherelement (13), insbesondere Read-Only-Memory, Random-Access-Memory oder Flash-Memory, für ein Steuergerät (18) einer Brennkraftmaschine (1) insbesondere eines Kraftfahrzeugs, auf dem ein Computerprogramm abgespeichert ist, das das ein verfahren nach einem der vorangegangenen Ansprüche ausführt, wenn es auf einem Rechengerät, insbesondere auf einem Mikroprozessor (12), abläuft.

9. Computerprogramm, das auf einem Rechengerät, insbesondere auf einem Mikroprozessor (12), ablauffähig ist, **dadurch gekennzeichnet, dass** das Computerprogramm ein Verfahren nach einem der Ansprüche 1 bis ausführt, wenn es auf dem Rechengerät abläuft.

10. Computerprogramm nach Anspruch 9, **dadurch gekennzeichnet, dass** das Computerprogramm auf einem Speicherelement (13), insbesondere auf einem Flash-Memory, abgespeichert ist.

11. Steuergerät (18) für eine Brennkraftmaschine (1) insbesondere eines Kraftfahrzeugs, wobei die Brennkraftmaschine (1) mit mindestens einem Brennraum (4) versehen ist, in den Kraftstoff in einer ersten Betriebsart (B_mag) während einer Verdichtungsphase und in einer zweiten Betriebsart (B_hom) während einer Ansaugphase einspritzbar ist, wobei das Steuergerät (18) zur Umschaltung zwischen den Betriebsarten (B_mag, B_hom) vorgesehen ist und zum Umschalten von der zweiten Betriebsart (B_hom) auf die erste Betriebsart (B_mag) eine Luftfüllung (rlsol) des Brennraums (4) auf einen Endwert (rlmdhmms) erhöht, **dadurch gekennzeichnet, dass** das Steuergerät (18) die Luftfüllung (rlsol) des Brennraums (4) während des Umschaltens von der zweiten Betriebsart (B_hom) auf die erste Betriebsart (B_mag) noch in der zweiten Betriebsart (B_hom) bei einem Kraftstoff-Luft-Verhältnis Lambda gleich Eins zunächst auf einen Zwischenwert (rlmdmxh) erhöht, die Luftfüllung (rlsol) bis zum Umschalten auf die erste Betriebsart (B_mag) auf dem Zwischenwert (rlmdmxh) belässt und die Luftfüllung (rlsol) dann zum Umschalten auf die erste Betriebsart (B_mag) auf den Endwert (rlmdhmms) einstellt.

12. Steuergerät (18) nach Anspruch 11, **dadurch gekennzeichnet, dass** das Steuergerät (18) Mittel zur Ausführung eines Verfahrens nach einem der Ansprüche 2 bis 7 aufweist.

13. Brennkraftmaschine (1) insbesondere für ein Kraftfahrzeug, wobei die Brennkraftmaschine (1) mit mindestens einem Brennraum (4) versehen ist, in den Kraftstoff in einer ersten Betriebsart (B_mag) während einer Verdichtungsphase und in einer zweiten Betriebsart (B_hom) während einer Ansaugphase einspritzbar ist, wobei die Brennkraftmaschine (1) ein Steuergerät (18) umfasst, das zwischen den Betriebsarten (B_mag, B_hom) umschaltet und zum Umschalten von der zweiten Betriebsart (B_hom) auf die erste Betriebsart (B_mag) eine Luftfüllung (rlsol) des Brennraums (4) auf einen Endwert (rlmdhmms) erhöht, **dadurch gekennzeichnet, dass** die Brennkraftmaschine (1) durch das Steuergerät (18) die Luftfüllung (rlsol) des Brennraums (4) während des Umschaltens von der zweiten Betriebsart (B_hom) auf die erste Betriebsart (B_mag) noch in der zweiten Betriebsart (B_hom)bei einem Kraftstoff-Luft-Verhältnis Lambda gleich Eins zunächst auf einen Zwischenwert (rlmdmxh) erhöht, die Luftfüllung (rlsol) bis zum Umschalten auf die erste Betriebsart (B_mag) auf dem Zwischenwert (rlmdmxh) beläßt und die Luftfüllung (rlsol) dann zum Umschalten auf die erste Betriebsart (B_mag) auf den Endwert (rlmdhmms) einstellt.

14. Brennkraftmaschine (1) nach Anspruch 13, **dadurch gekennzeichnet, dass** die Brennkraftmaschine (1) Mittel zur Ausführung eines Verfahrens nach einem der Ansprüche 2 bis 7 aufweist.

## Claims

1. Method for operating an internal combustion engine (1) in particular of a motor vehicle, in which method fuel is injected into a combustion chamber (4) of the internal combustion engine (1) during a compression phase in a first operating mode (B_mag) and during an intake phase in a second operating mode (B_hom), and in which method a switch is made between the operating modes (B_mag, B_hom), with an air charge (rlsol) of the combustion chamber (4) being increased to an end value (rlmdhmms) in order to switch from the second operating mode (B_hom) to the first operating mode (B_mag), **characterized in that**, during the switch from the second operating mode (B_hom) to the first operating mode (B_mag), the air charge (rlsol) of the combustion chamber (4) is firstly increased, still in the second operating mode (B_hom) at an air/fuel ratio lambda of equal to one, to an intermediate value (rlmdmxh), the air charge (rlsol) is left at the intermediate value (rlmdmxh) until the switch to the first operating mode (B_mag), and the air charge (rlsol) is then set to the end value (rlmdhmms) in order to switch to the first operating mode (B_mag).

2. Method according to Claim 1, **characterized in that** the intermediate value (rlmdmxh) for the air charge (rlsol) of the combustion chamber (4) is selected, as a function of an ignition angle during the switch, for an air/fuel mixture which is contained in the combustion chamber (4).

3. Method according to Claim 2, **characterized in that** the intermediate value (rlmdmxh) is selected as a function of the latest possible ignition angle during the switch.

4. Method according to Claim 2 or 3, **characterized in that** the intermediate value (rlmdmxh) is selected such that a potential actual torque jump which results from the increase in the air charge (rlsol) to the intermediate value (rlmdmxh) can be reduced by means of an adjustment of the ignition angle in the late direction, in such a way that the torque jump lies within predefinable tolerance limits, and is ideally zero.

5. Method according to Claim 4, **characterized in that** the intermediate value (rlmdmxh) is selected such that the potential actual torque jump which results from the increase in the air charge (rlsol) to the intermediate value (rlmdmxh) can be compensated by means of an adjustment of the ignition angle in the late direction.

6. Method according to Claim 2 or 3, **characterized in that** the intermediate value (rlmdmxh) is increased by a measure (delta_rlsol) for a tolerable torque jump during the switch of the operating mode from the second operating mode (B_hom) to the first operating mode (B_mag).

7. Method according to Claim 6, **characterized in that** the switch from the second operating mode (B_hom) to the first operating mode (B_mag) is prohibited if the intermediate value (rlmdmxh) which is increased by the measure (delta_rlsol) is not greater than a minimum value (r1mdhm_min) for the air charge in the first operating mode (B_mag).

8. Storage element (13), in particular read-only memory, random-access memory or flash memory, for a control unit (18) of an internal combustion engine (1) in particular of a motor vehicle, on which storage element (13) is stored a computer program which carries out a method according to one of the preceding claims if it is executed on a computer, in particular on a microprocessor (12).

9. Computer program which can be executed on a computer, in particular on a microprocessor (12), **characterized in that** the computer program carries out a method according to one of Claims 1 to 7 when it is executed on the computer.

10. Computer program according to Claim 9, **characterized in that** the computer program is stored on a storage element (13), in particular on a flash memory.

11. Control unit (18) for an internal combustion engine (1) in particular of a motor vehicle, with the internal combustion engine (1) being provided with at least one combustion chamber (4) into which fuel can be injected during a compression phase in a first operating mode (B_mag) and during an intake phase in a second operating mode (B_hom), with the control unit (18) being provided for switching between the operating modes (B_mag, B_hom) and increasing an air charge (rlsol) of the combustion chamber (4) to an end value (rlmdhmms) in order to switch from the second operating mode (B_hom) to the first operating mode (B_mag), **characterized in that**, during the switch from the second operating mode (B_hom) to the first operating mode (B_mag), the control unit (18) firstly increases the air charge (rlsol) of the combustion chamber (4), still in the second operating mode (B_hom) at an air/fuel ratio lambda of equal to one, to an intermediate value (rlmdmxh), leaves the air charge (rlsol) at the intermediate value (rlmdmxh) until the switch to the first operating mode (B_mag), and then sets the air charge (rlsol) to the end value (rlmdhmms) in order to switch to the first operating mode (B_mag).

12. Control unit (18) according to Claim 11, **characterized in that** the control unit (18) has means for carrying out a method according to one of Claims 2 to 7.

13. Internal combustion engine (1) in particular for a motor vehicle, with the internal combustion engine (1) being provided with at least one combustion chamber (4) into which fuel can be injected during a compression phase in a first operating mode (B_mag) and during an intake phase in a second operating mode (B_hom), with the internal combustion engine (1) comprising a control unit (18) which switches between the operating modes (B_mag, B_hom) and increases an air charge (rlsol) of the combustion chamber (4) to an end value (rlmdhmms) in order to switch from the second operating mode (B_hom) to the first operating mode (B_mag), **characterized in that**, during the switch from the second operating mode (B_hom) to the first operating mode (B_mag), the internal combustion engine (1), by means of the control unit (18), firstly increases the air charge (rlsol) of the combustion chamber (4), still in the second operating mode (B_hom) at an air/fuel ratio lambda of equal to one, to an intermediate value (rlmdmxh), leaves the air charge (rlsol) at the intermediate value (rlmdmxh) until the switch to the first operating mode (B_mag), and then sets the air charge (rlsol) to the end value (rlmdhmms) in order to switch to the first operating mode (B_mag).

14. Internal combustion engine (1) according to Claim 13, **characterized in that** the internal combustion engine (1) has means for carrying out a method according to one of Claims 2 to 7.

## Revendications

1. Procédé de gestion d'un moteur à combustion interne (1), notamment d'un véhicule automobile, selon lequel le carburant est injecté dans la chambre de combustion (4) du moteur (1) selon un premier mode de fonctionnement (B_mag), au cours d'une phase de compression et selon un second mode de fonctionnement (B_hom) pendant une phase d'admission, et on commute entre les deux modes de fonctionnement (B_mag, B-hom),
et pour commuter du second mode de fonctionnement (B-hom) vers le premier mode de fonctionnement (B_mag), on augmente la charge d'air (rlsol) de la chambre de combustion (4) jusqu'à une valeur finale (rlmdhmms),
**caractérisé en ce que**
la charge d'air (rlsol) de la chambre de combustion (4) pendant la commutation entre le second mode de fonctionnement (B_hom) vers le premier mode de fonctionnement (B-mag) sera augmentée encore dans le second mode de fonctionnement (B_hom) pour un coefficient lambda correspondant au rapport carburant/ air égal à un, tout d'abord sur une valeur intermédiaire (rlmdmxh), en laissant la charge d'air (rlsol) jusqu'à la commutation sur le premier mode de fonctionnement (B_mag) à la valeur intermédiaire (rlmdmxh) et on règle alors la charge d'air (rlsol) à la valeur finale (rlmdhmms) par commutation sur le premier mode de fonctionnement (B_mag).

2. Procédé selon la revendication 1,
**caractérisé en ce qu'**
on sélectionne la valeur intermédiaire (rlmdmxh) pour la charge d'air (rlsol) de la chambre de combustion (4) en fonction de l'angle de vilebrequin pendant la commutation pour un mélange carburant/ air contenu dans la chambre de combustion (4).

3. Procédé selon la revendication 2,
**caractérisé en ce qu'**
on sélectionne la valeur intermédiaire (rlmdmxh) en fonction de l'angle d'allumage le plus en retard possible pendant la commutation.

4. Procédé selon la revendication 2 ou 3,
**caractérisé en ce qu'**
on sélectionne la valeur intermédiaire (rlmdmxh) pour qu'une variation brusque de couple réel, potentiel, résultant de l'augmentation de la charge d'air (rlsol) sur la valeur intermédiaire (rlmdmxh) puisse être diminuée par un réglage de l'angle d'allumage dans le sens du retard de façon que la variation de couple se situe dans des limites de tolérance prédéfinies et soit, de manière idéale, égale à zéro.

5. Procédé selon la revendication 4,
**caractérisé en ce que**
la valeur intermédiaire (r1mdmxh) est choisie pour que la variation brusque de couple réel, potentiel, résultant de l'augmentation de la charge d'air (rlsol) sur la valeur intermédiaire (rlmdmxh), puisse être compensée par un réglage de l'angle d'allumage dans le sens du retard.

6. Procédé selon la revendication 2ou 3,
**caractérisé en ce qu'**
on augmente la valeur intermédiaire (rlmdmxh) d'une mesure (delta_rlsol) pour une variation brusque de couple, tolérable, lors de la commutation du mode de fonctionnement passant du second mode de fonctionnement (B_hom) au premier mode de fonctionnement (B_mag).

7. Procédé selon la revendication 6,
**caractérisé en ce que**
la commutation du second mode de fonctionnement (B_hom) sur le premier mode de fonctionnement (B_mag) est interdite si la valeur intermédiaire (rlmdmxh) augmentée de la mesure (delta_rlsol) n'est pas supérieure à une valeur minimale (rlmdhm_min) pour la charge d'air dans le premier mode de fonctionnement (B_mag).

8. Elément de mémoire (13), notamment mémoire morte ROM, mémoire vive RAM ou mémoire FLASH pour un appareil de commande (18) d'un moteur à combustion interne (1) notamment d'un véhicule automobile dans laquelle est enregistré un programme d'ordinateur mettant en oeuvre le procédé selon l'une des revendications précédentes, lorsque le programme est exécuté dans un calculateur, notamment un microprocesseur (12).

9. Programme d'ordinateur exécuté sur un calculateur, notamment un microprocesseur (12),
**caractérisé en ce qu'**
il exécute un procédé selon l'une des revendications 1 à 7 lorsqu'il s'exécute sur le calculateur.

10. Programme d'ordinateur selon la revendication 9,
**caractérisé en ce qu'**
il est enregistré sur un élément de mémoire (13), notamment dans une mémoire FLASH.

11. Appareil de commande (18) d'un moteur à combustion interne (1) notamment d'un véhicule automobile, le moteur (1) ayant au moins une chambre de combustion (4) dans laquelle in injecte du carburant au cours d'une première phase de fonctionnement (B_mag) pendant la phase de compression et, selon un second mode de fonctionnement (B_hom), pendant la phase d'admission,
l'appareil de commande (18) étant prévu pour commuter entre les modes de fonctionnement (B_mag, B_hom) et pour commuter du second mode de fonctionnement (B_hom) sur le premier mode de fonctionnement (B_mag), on augmente une charge d'air (rlsol) de la chambre de combustion (4) à une valeur finale (rlmdhmms),
**caractérisé en ce que**
l'appareil de commande (18) augmente la charge d'air (rlsol) de la chambre de combustion (4) au cours de commutation du second mode de fonctionnement (B_hom) sur le premier mode de fonctionnement (B_mag) encore au cours du second mode de fonctionnement (B_hom) pour un coefficient Lambda correspondant à un rapport carburant/air égal à un, tout d'abord sur une valeur intermédiaire (rlmdmxh), et on laisse la charge d'air (rlsol) à la valeur intermédiaire (rlmdmxh) jusqu'à la commutation sur le premier mode de fonctionnement (B_mag) puis on règle la charge d'air sur la valeur finale (rlmdhmms) lors de la commutation sur le premier mode de fonctionnement (B_mag).

12. Appareil de commande (18) selon la revendication 11,
**caractérisé en ce qu'**
il comporte des moyens pour mettre en oeuvre un procédé selon l'une des revendications 2 à 7.

13. Moteur à combustion interne (1) notamment pour un véhicule automobile,
le moteur (1) ayant au moins une chambre de combustion (4) dans laquelle on injecte du carburant pour un premier mode de fonctionnement (B_mag) au cours d'une phase de compression et pour un second mode de fonctionnement (B_hom) au cours d'une phase d'admission,
le moteur à combustion interne (1) ayant un appareil de commande qui commute entre les modes de fonctionnement (B_mag, B_hom) et, par commutation du second mode de fonctionnement (B_hom) au premier mode de fonctionnement (B_mag), on augmente la charge d'air (rlsol) de la chambre de combustion (4) à une valeur finale (rlmdhmms),
**caractérisé en ce que**
dans le moteur à combustion interne (1), l'appareil de commande (18) augmente la charge d'air (rlsol) de la chambre de combustion (4) au cours de la commutation du second mode de fonctionnement (B_hom) vers premier mode de fonctionnement (B_mag), encore dans le second mode de fonctionnement (B_hom), pour la faire passer tout d'abord à une valeur intermédiaire (rlmdmxh) pour un coefficient lambda correspondant au rapport carburant/air égal à un, lors du passage du second mode de fonctionnement (B_hom) au premier mode de fonctionnement (B_mag), et laisser la charge d'air (rlsol) sur la valeur intermédiaire (rlmdmxh) jusqu'à la commutation sur le premier mode de fonctionnement (B_mag) et régler ensuite la charge d'air (rlsol) sur la valeur finale (rlmdhmms) lors de la commutation sur le premier mode de fonctionnement (B_mag).

14. Moteur à combustion interne (1) selon la revendication 13,
**caractérisé en ce qu'**
il comporte des moyens pour mettre en oeuvre un procédé selon l'une des revendications 2 à 7.
